# EUROPÄISCHE PATENTANMELDUNG

(11) **EP 4 618 039 A1**
(43) Veröffentlichungstag der Anmeldung: **17.09.2025**
(21) Anmeldenummer: 25160073.0
(22) Anmeldetag: 25.02.2025
(51) Int. Cl.: G06V 10/774, G06V 10/82, G06V 20/52

(54) **VERFAHREN ZUM ERZEUGEN EINES TRAININGSDATENSATZES**

(30) Priorität: 11.03.2024 DE 102024202245
(71) Anmelder: Robert Bosch GmbH, 70442 Stuttgart (DE)
(72) Erfinder: Troeltzsch, Uwe, 51503 Roesrath (DE); Steuler, Jan Linus, 61200 Woelfersheim (DE); Koelsch, Andreas, 86971 Peiting (DE); Sgarz, Heiko, 71229 Leonberg (DE); Law, Kakit, 72760 Reutlingen (DE); Giliard, Anke, 70180 Stuttgart (DE); Frischen, Andreas, 71229 Leonberg (DE); Dekel, Tal, 522590 Ramat Gan (IL); Fiederer, Lukas, 72336 Balingen (DE); Moster, Benjamin, 75223 Niefern-Oeschelbronn (DE)

(57) **Zusammenfassung**

Die Erfindung betrifft ein Computerimplementiertes Verfahren (300) zum Erzeugen eines Trainingsdatensatzes (143) für ein Training einer künstlichen Intelligenz (125) zum Betreiben eines Messgeräts (100), insbesondere eines Wanddiagnosegeräts, umfassend:
Empfangen (301) von unklassifizierten Sensordaten (172) wenigstens einer Sensoreinheit (101) eines Messgeräts (100) durch ein Klassifikatormodul (183); Klassifizieren (303) der unklassifizierten Sensordaten (172) und Bereitstellen von klassifizierten Sensordaten (174) durch ein Klassifikatormodul (183); und Hinzufügen (305) der klassifizierten Sensordaten (174) zu einem Trainingsdatensatz (143).

## Beschreibung

Die vorliegende Erfindung betrifft ein Verfahren zum Erzeugen eines Trainingsdatensatzes für ein Training einer künstlichen Intelligenz für ein Wanddiagnosegerät.

### Stand der Technik

Aus dem Stand der Technik sind Diagnosegeräte zum Diagnostizieren von Wänden und zum Detektieren von in den Wänden ausgebildeten Objekten bekannt.

Es ist eine Aufgabe der vorliegenden Erfindung, ein verbessertes Verfahren zum Erzeugen eines Trainingsdatensatzes für ein Training einer künstlichen Intelligenz eines Wanddiagnosegeräts bereitzustellen.

Die Aufgabe wird durch das Verfahren des Anspruchs 1 gelöst. Vorteilhafte Ausführungsformen sind Gegenstand der abhängigen Ansprüche.

Nach einem Aspekt wird ein Computerimplementiertes Verfahren zum Erzeugen eines Trainingsdatensatzes für ein Training einer künstlichen Intelligenz zum Betreiben eines Messgeräts, insbesondere eines Wanddiagnosegeräts, bereitgestellt, wobei das Verfahren umfasst:
Empfangen von unklassifizierten Sensordaten wenigstens einer Sensoreinheit eines Messgeräts durch ein Klassifikatormodul, wobei die Sensordaten eine zu diagnostizierende Wand mit einem Wandtyp abbilden, und wobei in der Wand in einer Objektposition ein Objekt eines Objekttyps angeordnet ist;
Klassifizieren der unklassifizierten Sensordaten und Bereitstellen von klassifizierten Sensordaten durch ein Klassifikatormodul, wobei das Klassifikatormodul als eine künstliche Intelligenz ausgebildet und über ein Semi-Supervised Learning trainiert ist, für unklassifizierte Sensordaten eine Klassifizierung in Bezug auf den Wandtyp der Wand und/oder die Objektposition und/oder den Objekttyp des Objekts zu bestimmen; und
Hinzufügen der klassifizierten Sensordaten zu einem Trainingsdatensatz.

Hierdurch kann der technische Vorteil erreicht werden, dass ein verbessertes Verfahren zum Erzeugen eines Trainingsdatensatzes für ein Training einer künstlichen Intelligenz zum Betreiben eines Messgeräts, insbesondere eines Wanddiagnosegeräts bereitgestellt werden kann. Hierzu werden zunächst unklassifizierte Sensordaten wenigstens einer Sensoreinheit eines Messgeräts durch ein Klassifikatormodul empfangen. Die Sensordaten bilden hierbei eine zu untersuchende Wand eines Wandtyps und in der Wand angeordnete Objekte ab. Die unklassifizierten Sensordaten werden durch das Klassifikatormodul klassifiziert und in entsprechend klassifizierte Sensordaten umgewandelt.

Das Klassifikatormodul ist hierbei als eine künstliche Intelligenz ausgebildet, die über ein Semi-Supervised Learning-Prozess trainiert ist, für unklassifizierte Sensordaten eine entsprechende Klassifizierung zu finden. Die Klassifizierung wird hierbei in Bezug auf den Wandtyp und/oder die Objektposition und/oder den Objekttyp der in der Wand angeordneten Objekte bewirkt. Die entsprechend durch das Klassifikatormodul klassifizierten Sensordaten werden darauffolgend zu den zu erzeugenden Trainingsdatensatz hinzugefügt.

Durch die Verwendung einer entsprechend trainierten künstlichen Intelligenz als Klassifikatormodul kann eine präzise und verlässliche Klassifikation von unklassifizierten Sensordaten bewirkt werden. Die klassifizierten Sensordaten sind in Bezug auf die Klassifizierung ausgezeichnet. Die Klassifizierung besagt, welche in der Wandtyp, die durch die Sensordaten abgebildete Wand aufweist bzw. in welcher Objektposition oder welchen Objekttyp ein in der Wand angeordnetes Objekt positioniert ist bzw. aufweist.

Klassifizierte Sensordaten entsprechen den aus dem Stand der Technik des maschinellen Lernens bekannten gelabelten Sensordaten. Die unklassifizierten Sensordaten entsprechenden aus dem Stand der Technik bekannten ungelabelten Sensordaten. Die Klassifizierung der klassifizierten Sensordaten entspricht somit einer Kennzeichnung der Sensordaten in Bezug auf das jeweilige Klassifizierungsmerkmal.

Nach einer Ausführungsform wurde das Klassifikatormodul basierend auf klassifizierten Sensordaten und Sensordaten mit Pseudoklassifizierungen trainiert wurde, für unklassifizierte Sensordaten entsprechende Klassifizierungen zu bestimmen, wobei die Pseudoklassifizierungen durch ein Pseudoklassifizierungsmodul basierend auf unklassifizierten Sensordaten vorhergesagt wurden, und wobei das Pseudoklassifizierungsmodul als eine künstliche Intelligenz ausgebildet und auf klassifizierten Sensordaten trainiert ist, für unklassifizierte Sensordaten Pseudoklassifizierungen zu bestimmen.

Hierdurch kann der technische Vorteil erreicht werden, dass ein verbessertes Klassifikatormodul zum Klassifizieren unklassifizierter Sensordaten bereitgestellt werden kann. Das Klassifikatormodul ist hierbei auf einem Trainingsdatensatz trainiert, der klassifizierte Sensordaten und Sensordaten mit einer Pseudoklassifizierung umfasst. Die Sensordaten mit Pseudoklassifizierung wurden wiederum durch ein Pseudoklassifizierungsmodul klassifiziert. Das Pseudoklassifizierungsmodul ist wiederum auf klassifizierten Sensordaten trainiert, für unklassifizierte Sensordaten Pseudoklassifizierungen zu bestimmen. Die Pseudoklassifizierungen sind hierbei Klassifizierungen der Sensordaten bezüglich der oben genannten Klassifizierungsmerkmale, die durch das Pseudoklassifizierungsmodul generiert wurden.

Die klassifizierten Sensordaten sind hingegen nicht automatisch klassifiziert, sondern wurden, wie im Stand der Technik im Bereich des maschinellen Lernens üblich, händisch klassifiziert. Die Sensordaten können auf Messungen von Messgeräten basieren, die von realen Wänden von Gebäuden ausgeführt wurden. Alternativ oder zusätzlich können die Sensordaten auf Messungen von Laborwänden basieren.

Die Laborwände haben hierbei den Vorteil, dass alle Merkmale der Wand bzw. der in den Wänden angeordneten Objekte dem Experimentator bekannt sind. Hierdurch kann eine präzisere händische Klassifizierung der entsprechend aufgenommenen Sensordaten erfolgen. Durch das Verwenden von klassifizierten Sensordaten und Sensordaten mit Pseudoklassifizierung für das Training des Klassifikatormoduls kann ein verbessertes Training des Klassifikatormoduls erreicht werden, als dies ausschließlich auf klassifizierten Sensordaten möglich wäre. Hierdurch kann die Performance des entsprechend trainierten Klassifikatormoduls verbessert werden.

Nach einer Ausführungsform ist das Klassifikatormodul als Faltungsnetzwerk ausgebildet.

Hierdurch kann der technische Vorteil erreicht werden, dass ein leistungsfähiges Klassifikatormodul bereitgestellt werden kann.

Nach einer Ausführungsform umfasst das Klassifizieren:
Generieren von Latentraum-Repräsentationen der unklassifizierten Sensordaten in einem Latentraum durch das Klassifikatormodul, wobei Latentraum-Repräsentationen von Sensordaten als dimensionsreduzierte Darstellungen der Sensordaten ausgebildet sind;
Ermitteln von Abständen zwischen den Latentraum-Repräsentationen der unklassifizierten Sensordaten zu Latentraum-Repräsentationen von klassifizierten Sensordaten im Latentraum durch ein Abstandsermittlungsmodul; Klassifizieren der unklassifizierten Sensordaten in Bezug auf den Wandtyp der Wand und/oder die Objektposition und/oder den Objekttyp des Objekts basierend auf den Abständen der Latentraum-Repräsentationen der unklassifizierten Sensordaten zu den Latentraum-Repräsentationen der klassifizierten Sensordaten im Latentraum, wobei die unklassifizierten Sensordaten einer Klassifikation der klassifizierten Sensordaten entsprechend klassifiziert werden, falls die Abstände der Latentraum-Repräsentationen der unklassifizierten Sensordaten zu den Latentraum-Repräsentationen der klassifizierten Sensordaten im Latentraum kleiner oder gleich einem vordefinierten Grenzwert sind.

Hierdurch kann der technische Vorteil erreicht werden, dass eine präzise Klassifizierung der unklassifizierten Sensordaten durch das Klassifikatormodul ermöglicht ist. Hierzu werden durch das Klassifikatormodul basierend auf den unklassifizierten Sensordaten zunächst Latentraumrepräsentationen in einem Latentraum generiert. Die Latentraum-Repräsentationen stellen hierbei dimensionsreduzierte Darstellungen der Sensordaten dar. Die Latentraum-Repräsentationen können, wie aus dem Stand der Technik bekannt, als Vektordarstellungen ausgebildet sein. Die Latentraum-Repräsentationen können insbesondere als dimensionsreduzierte Kodierungen der Information der Sensordaten interpretiert werden. Ferner werden durch ein Abstandsermittlungsmodul Abstände der für die unklassifizierten Sensordaten ermittelten Latentraum-Repräsentationen zu Latentraum-Repräsentationen von bereits klassifizierten Sensordaten im Latentraum ermittelt. Basierend auf den ermittelten Abständen kann darauffolgend eine Klassifizierung der unklassifizierten Sensordaten erfolgen. So werden die unklassifizierten Sensordaten gemäß klassifizierten Sensordaten klassifiziert, sprich der gleichen Objektklasse zugewiesen wie die klassifizierten Sensordaten, falls die Abstände der Latentraum-Repräsentationen der unklassifizierten Sensordaten zu den Latentraum-Repräsentationen der klassifizierten Sensordaten kleiner oder gleich einem vordefinierten Grenzwert sind. Die Klassifizierung über die Abstandsbestimmung der Latentraum-Repräsentationen im Latentraum stellt eine präzise und zuverlässige Methode zur Klassifizierung unklassifizierter Sensordaten dar.

Die jeweilige Klassifizierung bzw. die entsprechende Objektklasse der klassifizierten Sensordaten kann in den Vektordarstellungen der entsprechenden Latentraum-Repräsentationen als ein zusätzlicher Eintrag berücksichtigt sein. Die Klassifizierung mittels der Latentraum-Repräsentationen basiert auf der Idee, dass Sensordaten mit gleicher Klassifikation Latentraum-Repräsentationen mit gleicher oder mindestens sehr ähnlicher Vektordarstellungen aufweisen. Derartige Latentraum-Repräsentationen weisen im Latentraum entsprechend kleine Abstände zueinander auf. Über die Abstandsbestimmung und die Wahl eines passenden Grenzwerts für den Abstand ist damit eine Klassifizierung unklassifizierter Sensordaten möglich.

Nach einer Ausführungsform sind die Abstände als euklidische Abstände definiert.

Hierdurch kann der technische Vorteil erreicht werden, dass eine einfache Abstandsbestimmung ermöglicht ist.

Nach einer Ausführungsform umfasst das Klassifizieren:
Generieren von Latentraum-Repräsentationen der unklassifizierten Sensordaten in einem Latentraum durch das Klassifikatormodul, wobei Latentraum-Repräsentationen von Sensordaten als dimensionsreduzierte Darstellungen der Sensordaten ausgebildet sind;
Klassifizieren der unklassifizierten Sensordaten in Bezug auf den Wandtyp der Wand und/oder die Objektposition und/oder den Objekttyp des Objekts basierend auf den Latentraum-Repräsentationen der unklassifizierten Sensordaten durch ein Klassifizierungsmodul, wobei das Klassifizierungsmodul als eine künstliche Intelligenz ausgebildet und auf Latentraum-Repräsentationen von klassifizierten Sensordaten trainiert ist, eine Klassifizierung der jeweiligen Sensordaten zu bestimmen.

Hierdurch kann der technische Vorteil erreicht werden, dass eine präzise Klassifikation der unklassifizierten Sensordaten basierend auf den Latentraum-Repräsentationen der unklassifizierten Sensordaten ermöglicht ist.

Nach einer Ausführungsform ist das Klassifikatormodul als ein Generative Adversarial Network GAN, insbesondere als ein Autoencoder mit einem Encoder-Modul und einem Decoder-Modul, ausgebildet.

Hierdurch kann der technische Vorteil erreicht werden, dass ein leistungsfähiges und verlässliches Klassifikatormodul bereitgestellt werden kann.

Nach einer Ausführungsform umfassen die Sensordaten Radardaten eines Radarsensors und/oder Daten eines Induktionssensors und/oder eines Wirbelstromsensors und/oder eines Kapazitätssensors und/oder eines Wechselstromsensors und/oder eines NMR-Sensors und/oder eines Ultraschallsensors.

Hierdurch kann der technische Vorteil erreicht werden, dass über die verschiedenen Sensortypen eine große Bandbreite von verschiedenen physikalischen Messgrößen berücksichtigt werden kann. Dies ermöglicht der Erzeugung eines umfassenden Trainingsdatensatzes. Ferner erlaubt dies ein umfassenden Training der künstlichen Intelligenz, die darauf trainiert werden kann, in der Wanddiagnose die verschiedenen physikalischen Messgrößen und die darauf basierenden Informationen bezüglich der Wand und der darin angeordneten Objekte zu berücksichtigen.

Nach einer Ausführungsform erfolgt die Klassifikation der Sensordaten ferner in Bezug auf eine Objekttiefe und/oder eine Objektausdehnung des Objekts erfolgt.

Hierdurch kann der technische Vorteil erreicht werden, dass zusätzliche Informationen bezüglich der Eigenschaften der in der Wand angeordneten Objekte in das Training und die Wanddiagnose miteinfließen können. Hierdurch kann die Wanddiagnose des Diagnosemoduls verbessert werden.

Nach einer Ausführungsform umfassen Objektklassen des Objekttyps des Objekts: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps der Wand: Betonwand, Leichtbau-/Trockenbauwand, gemauerte Wand und/oder von vermauerten Steinen der Wand, Fußbodenheizung, Wandheizung umfassen.

Hierdurch kann der technische Vorteil erreicht werden, dass eine große Anzahl verschiedener Objekte unterschiedlicher Objekttypen erkannt bzw. klassifiziert werden kann. Das Messgerät bzw. das Diagnosemodul kann hierbei darauf trainiert sein, übliche in Gebäudewänden verbaute Objekte zu detektieren und zu klassifizieren. Dies ermöglicht eine besonders präzise Wanddiagnose, in der die detektierten Objekte präzise und eindeutig den entsprechenden Objektklassen zugeordnet werden können.

Durch die präzise Objektklassifizierung und das Bereitstellen der entsprechenden Klassifizierungsinformation dem Nutzer über die Anzeigeeinheit ist eine möglichst aussagekräftige Wanddiagnose ermöglicht. In dem der Nutzer nicht nur weiß, dass und wo sich ein Objekt innerhalb der Wand befindet, sondern auch um welchen Objekttyp es sich bei dem detektierten Objekt handelt, kann der Nutzer entsprechend entscheiden, wie die weitere Bearbeitung der Wand in Bezug auf das detektierte Objekt auszuführen ist. Das Bereitstellen der Objekttypen der Objektklassifikation der detektierten Objekte stellt somit einen essentiellen Bereich der Wanddiagnose dar, da der Nutzer basierend auf dem angegebenen Objekttyp die geplante Bearbeitung der Wand entsprechend anpassen kann.

Nach einem Aspekt wird ein Trainingsdatensatz für ein Training einer künstlichen Intelligenz eines Messgeräts zur Wanddiagnostik bereitgestellt, wobei der Trainingsdatensatz durch das Verfahren zum Erzeugen eines Trainingsdatensatzes zum Trainieren einer künstlichen Intelligenz zum Betreiben eines Messgeräts nach einer der voranstehenden Ausführungsformen erzeugt wurde.

Nach einem Aspekt wird eine Recheneinheit bereitgestellt, die eingerichtet ist, das Verfahren zum Erzeugen eines Trainingsdatensatzes zum Trainieren einer künstlichen Intelligenz zum Betreiben eines Messgeräts nach einer der voranstehenden Ausführungsformen auszuführen.

Nach einem Aspekt wird ein Computerprogrammprodukt umfassend Befehle bereitgestellt, die bei der Ausführung des Programms durch eine Datenverarbeitungseinheit diese veranlassen, das Verfahren zum Erzeugen eines Trainingsdatensatzes zum Trainieren einer künstlichen Intelligenz zum Betreiben eines Messgeräts nach einer der voranstehenden Ausführungsformen auszuführen.

Ausführungsformen der Erfindung sind mit Bezug auf die folgenden Fig.en beschrieben. Die Fig.en zeigen:
- Fig. 1: eine schematische Darstellung eines Messgeräts gemäß einer Ausführungsform;
- Fig. 2: eine weitere schematische Darstellung des Messgeräts gemäß einer weiteren Ausführungsform;
- Fig. 3: eine weitere schematische Darstellung des Messgeräts gemäß einer weiteren Ausführungsform;
- Fig. 4: eine schematische Darstellung einer Messung des Messgeräts gemäß einer Ausführungsform,
- Fig. 5: eine weitere schematische Darstellung des Messgeräts gemäß einer weiteren Ausführungsform;
- Fig. 6: eine schematische Darstellung eines Systems zum Erzeugen eines Trainingsdatensatzes gemäß einer Ausführungsform,
- Fig. 7: eine weitere schematische Darstellung des Systems zum Erzeugen eines Trainingsdatensatzes gemäß einer weiteren Ausführungsform,
- Fig. 8: eine weitere schematische Darstellung des Systems zum Erzeugen eines Trainingsdatensatzes gemäß einer weiteren Ausführungsform,
- Fig. 9: eine weitere schematische Darstellung des Systems zum Erzeugen eines Trainingsdatensatzes gemäß einer weiteren Ausführungsform,
- Fig. 10: ein Flussdiagramm eines Verfahrens zum Erzeugen eines Trainingsdatensatzes gemäß einer Ausführungsform,
- Fig. 11: ein weiteres Flussdiagramm des Verfahrens zum Erzeugen eines Trainingsdatensatzes gemäß einer weiteren Ausführungsform,
- Fig. 12: ein weiteres Flussdiagramm des Verfahrens zum Erzeugen eines Trainingsdatensatzes gemäß einer weiteren Ausführungsform, und
- Fig. 13: eine schematische Darstellung eines Computerprogrammprodukts.

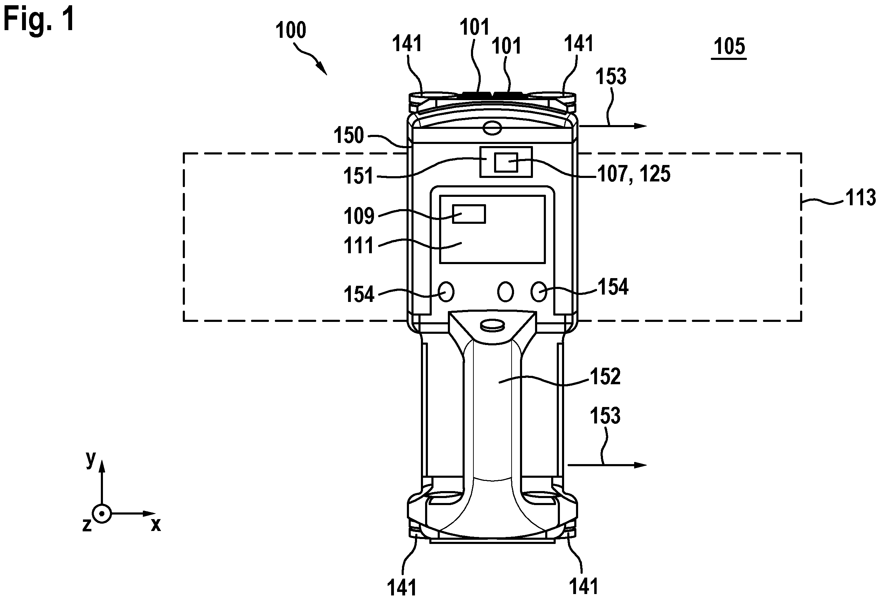

Fig. 1 zeigt eine schematische Darstellung eines Messgeräts 100 gemäß einer Ausführungsform.

Die vorliegende Erfindung betrifft ein Messgerät, insbesondere ein Wanddiagnosegerät für Untersuchungen von zu bearbeitenden Wänden 105. Im Stand der Technik sind Wanddiagnosegeräte bekannt, die dazu verwendet werden, in Wänden angeordnete Objekte zu detektieren. Derartige Geräte erlauben es einem Nutzer zu bearbeitende Wände nach in den Wänden angeordnete Objekte zu untersuchen, um hierauf basierend die geplanten Arbeiten, beispielsweise das Bohren in Wände, derart ausführen zu können, dass Beschädigungen der in den Wänden angeordnete Objekte vermieden werden können.

In der gezeigten Ausführungsform umfasst das Messgerät 100 ein Gehäuse 150 mit einem Griff 152 zum Greifen des Messgeräts 100 durch einen Nutzer, einer Anzeigeeinheit 111 zum Anzeigen von Diagnoseergebnissen 109 der Wanddiagnose und Bedienelemente 154 zum Schalten des Messgeräts 100 in verschiedene Betriebsmodi ausgebildet.

Erfindungsgemäß umfasst das Messgerät 100 wenigstens eine Radarsensoreinheit 101. Mittels der Radarsensoreinheit 101 können Radarsignal in Richtung der zu untersuchenden Wand 105 ausgesendet und von der Wand 105 reflektierte Radarsignale empfangen werden.

Die Radarsensoreinheit 101 kann beispielsweise als ein schmalbandiges Radardetektorgerät im Frequenzbereich 2,4 GHz bis 2,4835 GHz oder als ein ultrabreitbandiges Radardetektorgerät im Frequenzbereich 1,8 GHz bis 5, 8 GHz ausgebildet sein.

Das Messgerät 100 umfasst zur Ausführung der Wanddiagnose ferner ein Diagnosemodul 107, das auf einer Recheneinheit 151 des Messgeräts 100 ausführbar ist. Das Diagnosemodul 107 ist eingerichtet, basierend auf den Radardaten 103 der Radarsensoreinheit 101 eine entsprechende Diagnose der zu untersuchenden Wand auszuführen. Die Radardaten 103 der Radarsensoreinheit 101 bilden hierbei die zu untersuchende Wand 105 und gegebenenfalls innerhalb der Wand 105 angeordnete Objekte 113 ab.

Die durch das Diagnosemodul 107 ausgeführte Wanddiagnose umfasst hierbei wenigstens das Ausführen einer Objekterkennung. Die Objekterkennung umfasst hierbei eine Objektdetektion und eine Objektklassifikation des in der Wand 105 angeordneten Objekts 113. Die Objektdetektion umfasst hierbei wenigstens die Bestimmung einer Objektposition 115. Die Objektposition beschreibt hierbei die Positionierung des in der Wand 105 angeordneten Objekts in Bezug auf ein durch das Messgerät 100 festgelegtes Bezugssystem. Die Objektklassifikation des detektierten Objekts 113 umfasst wenigstens die Bestimmung eines Objekttyps 117 des detektierten Objekts 113.

Die derart bestimmten Diagnoseergebnisse der Wanddiagnose, sprich wenigstens die bestimmte Objektposition 115 und/oder der bestimmte Objekttyp 117 des in der Wand 105 angeordneten Objekts 113, werden darauffolgend in einer Anzeigeeinheit 111 des Messgeräts 100 einem Nutzer des Messgeräts 100 dargestellt. Die Anzeigeeinheit 111 kann beispielsweise als ein entsprechendes Display ausgebildet sein und die Diagnoseergebnisse 109 können visuell angezeigt werden. Zusätzlich kann die Anzeige der Diagnoseergebnisse 109 über akustische und/oder haptische Signale unterstützt werden. Die haptischen Signale können beispielsweise über entsprechende Vibrationssignale realisiert sein.

Das Objekt 113 kann hierbei beispielsweise durch ein entsprechendes Symbol im Display angezeigt werden. Das Objekt 113 kann hierbei in der entsprechenden Objektposition 115 in dem Display angezeigt werden. Die Objektausdehnung 121 kann durch eine entsprechende Größe des angezeigten Symbols visualisiert sein. Der jeweilige Objekttyp 117 des Objekts 113 kann mit einem entsprechenden Begriff oder einer farblichen Unterlegung des Symbols oder durch eine spezielle Form des das Objekt 113 repräsentierenden Symbols visualisiert werden.

Alternativ kann die Wanddiagnose zusätzlich die Bestimmung eines Wandtyps 123 in Form einer Wandtypenklassifikation der zu untersuchenden Wand 105 umfassen. Der Wandtyp 123 beschreibt hierbei den jeweiligen Typ der zu untersuchenden Wand 105. Der Wandtyp kann beispielsweise entsprechenden Wandtypklassen zugeordnet werden, die umfassen können: Betonwand, Leichtbau- /Trockenbauwand, gemauerte Wand und/oder von vermauerten Steinen der Wand, Fußbodenheizung, Wandheizung oder ähnlichen Gebäuden vorzufinden Wandtypen.

Gemäß einer Ausführungsform ist das Diagnosemodul 107 ferner eingerichtet, basierend auf den Radardaten 103 einer Objekttiefe 119 des Objekts 113 innerhalb der Wand 105 zu bestimmen. Die Objekttiefe 119 ist hierbei durch einen Abstand des in der Wand 105 ausgebildeten Objekts zu einer Oberfläche der Wand 105 definiert. Der Abstand kann auf der Objektseite beispielsweise in Bezug auf eine Objektoberfläche oder in Bezug auf einen Objektmittelpunkt definiert sein. Der Abstand zur Oberfläche der Wand 105 beschreibt hierbei einen kürzesten Abstand, der durch einen zur Oberfläche der Wand 105 senkrecht Richtung definiert ist.

Gemäß einer Ausführungsform ist das Diagnosemodul 107 ferner eingerichtet, basierend auf den Radardaten 103 eine Objektausdehnung 121 des Objekts 113 in wenigstens einer vordefinierten Richtung zu bestimmen. Die Objektausdehnung 121 des Objekts 113 beschreibt hierbei eine räumliche Ausdehnung des Objekts 113 in wenigstens einer Raumrichtung, vorzugsweise in zwei Raumrichtungen, besonders bevorzugt in drei Raumrichtungen. Das Objekt 113 kann hierdurch als ein eindimensionales, zweidimensionales oder dreidimensionales Objekt 113 beschrieben werden.

In der üblichen Verwendung wird das Messgerät 100 an der Wandoberfläche der zu untersuchenden Wand 105 platziert. Über die Radarsensoreinheit 101 werden Radarsignale in Richtung der Wand 105 ausgesendet und von der Wand 105 bzw. den danach angeordneten Objekten 113 reflektierte Radarsignale empfangen. Auf diesen Radardaten 103 der Radarsensoreinheit 101 wird durch das Diagnosemodul 107 die oben beschriebene Wanddiagnose ausgeführt und es werden entsprechende Diagnoseergebnisse 109 ermittelt.

Die Diagnoseergebnisse 109 können beispielsweise die Objektposition 115 und/oder den Objekttyp 117 des in der Wand 105 angeordneten Objekts 113 umfassen. Alternativ oder zusätzlich können die Diagnoseergebnisse 109 den Wandtyp 123 der Wand 105 und/oder die Objekttiefe 119 und/oder die Objektausdehnung 121 des Objekts 113 umfassen.

Die derart ausgestalteten Diagnoseergebnisse 109 können darauffolgend einen Nutzer des Messgeräts 100 in einer Anzeigeeinheit 111 des Messgeräts 100 angezeigt werden. Die Anzeigeeinheit 111 kann beispielsweise als ein entsprechendes Display ausgebildet sein. Die Diagnoseergebnisse 109 können in der Anzeigeeinheit 111 in graphischer Form oder in Textform angezeigt sein.

Gemäß einer Ausführungsform umfasst das Messgerät 100 ferner eine Bewegungserfassungseinheit 141. Mit der Bewegungserfassungseinheit 141 kann eine Bewegung des Messgeräts 100 relativ zur Wand 105 erfasst werden. Die Bewegungserfassungseinheit 141 kann hierzu beispielsweise wenigstens ein Rollenelement aufweisen. Bei Auflage des Rollenelements auf der Wandoberfläche der Wand 105 kann bei Bewegung des Messgeräts 100 entlang einer Bewegungsrichtung 153 durch Abrollen des Rollenelements die Bewegung des Messgeräts 100 relativ zur Wand 105 erfasst werden. Alternativ hierzu kann die Bewegungserfassungseinheit 141 eine andere Ausgestaltung aufweisen, mittels der eine relative Bewegung des Messgeräts 100 relativ zur Wand 105 erfassbar ist.

Durch die Bewegung des Messgeräts 100 relativ zur Wand 105 können Radardaten 103 der Radarsensoreinheit 101 für eine Mehrzahl verschiedener Positionierungen des Messgeräts 100 relativ zur Wand 105 aufgenommen werden. Dies ermöglicht eine Untersuchung der Wand 105 in einem größeren Raumbereich, als dies durch den Wirkbereich der Radarsensoreinheit 101 gegeben ist. Dies ermöglicht das Erfassen von Objekten 113, die eine größere räumliche Ausdehnung aufweisen, als der Wirkbereich der Radarsensoreinheit 101.

Während der Bewegung des Messgeräts 100 entlang der Bewegungseinrichtung 153 können durchgehend Radardaten 103 der Radarsensoreinheit 101 aufgenommen werden. Die Wanddiagnose kann basierend auf diesen Radardaten 103 während des Bewegens des Messgeräts 100 entlang der Bewegungsrichtung 153 durch das Diagnosemodul 107 ausgewertet werden. Dies ermöglicht eine beschleunigte Wanddiagnose, die ihre Positionierung des Messgeräts 100 relativ zur Wand 105 berücksichtigt.

Gemäß seiner Ausführungsform ist das Diagnosemodul 107 als eine entsprechende trainierte künstliche Intelligenz 125 ausgebildet. Die künstliche Intelligenz 125 ist hierbei wenigstens darauf trainiert, basierend auf den Radardaten 103 der Radarsensoreinheit 101 die oben beschriebene Wanddiagnose auszuführen und wenigstens die Objektposition 115 und den Objekttyp 117 eines in der Wand 105 angeordneten Objekts 113 zu bestimmen. Die Objektklassifizierung bzw. das Bestimmen des Objekttyps 117 umfasst hierbei das Zuordnen des detektierten Objekts 113 in vordefinierte Objektklassen.

Die Objektklassen können hierbei umfassen: Metall- /Nichtmetallobjekt Kabel für Niederspannung, Kabel mit einphasigem AC-Signal, Kabel mit mehrphasigen AC-Signa, Holzträger, Metallträger, Kunststoffrohr, wassergefülltes Kunststoffrohr, beispielsweise Frischwasserrohr, nicht wassergefülltes Kunststoffrohr, beispielsweise Abwasserrohr oder andere in Gebäudewänden übliche verbaute Elemente.

Ferner kann die künstliche Intelligenz 125 darauf trainiert sein, wenigstens auf den Radardaten 103 der Radarsensoreinheit 101 den Wandtyp 123 der zu untersuchenden Wand 105 zu bestimmen. Mögliche Wandtypen 123 können hierbei umfassen: Betonwand, Leichtbau- /Trockenbauwand, gemauerte Wand und/oder einzelne Steine der gemauerten Wand, Fußbodenheizung, Wandheizung oder andere übliche in Gebäuden verbaute Wandtypen.

Gemäß einer Ausführungsform kann das Messgerät 100 neben der Radarsensoreinheit 101 weitere zusätzliche Sensoren umfassen, mittels denen zusätzliche physikalische Größen detektierbar sind. Beispielsweise kann das Messgerät 100 einen Induktionssensor und/oder einen Wirbelstromsensor und/oder Kapazitätssensor und/oder einen Wechselstromsensor und/oder einen NMR-Sensor und/oder einen Ultraschallsensor oder andere in Wanddiagnosegeräten üblich verbaute Sensoren umfassen.

Das Diagnosemodul 107, insbesondere die entsprechende trainierte künstliche Intelligenz 125, kann hierbei darauf eingerichtet sein, basierend auf den Radardaten 103 der Radarsensoreinheit 101 und unter Berücksichtigung der zusätzlichen Sensorinformationen der weiteren Sensoren die oben beschrieben Wanddiagnose auszuführen. Die zusätzlichen Informationen der zusätzlichen oben genannten Sensoren können hierzu insbesondere zur Objekterkennung der in den Wänden 105 angeordneten Objekte 113 verwendet werden. Über die zusätzlichen Sensorinformationen kann gegebenenfalls eine verbesserte Detektion der Objekte 113 und gegebenenfalls eine verbesserte Klassifikation der Objekte 113 erreicht werden.

Insbesondere kann beispielsweise das Material der Objekte 113, beispielsweise als metallisches oder nichtmetallisches Material, durch die Verwendung der zusätzlichen Sensorinformation verbessert und klassifiziert werden.

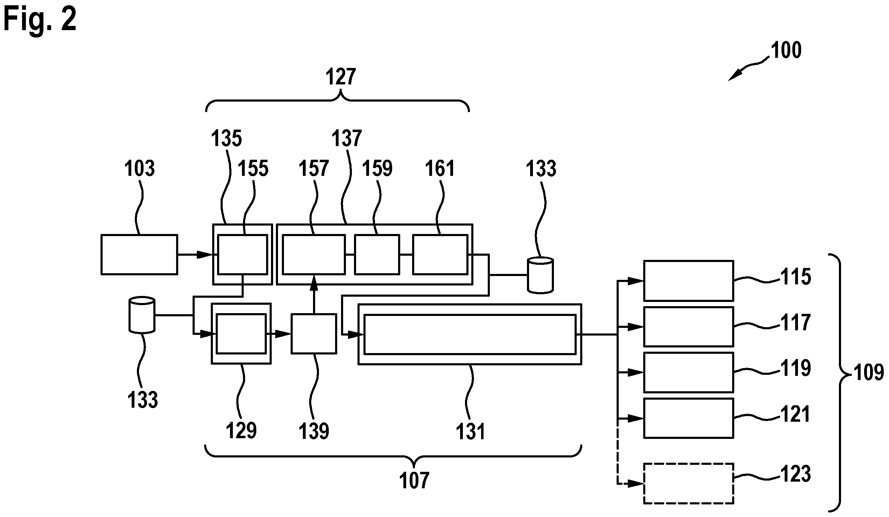

Fig. 2 zeigt eine weitere schematische Darstellung des Messgeräts 100 gemäß einer weiteren Ausführungsform.

In der gezeigten Ausführungsform umfasst das Messgerät 100 neben dem Diagnosemodul 107 ein Vorverarbeitungsmodul 127. Zur Wanddiagnose empfängt das Messgerät 100 zunächst die Radardaten 103 der Radarsensoreinheit 101. Über das Vorverarbeitungsmoduls 127 wird eine Vorverarbeitung der empfangenden Radardaten 103 ausgeführt. Über die Vorverarbeitung des Vorverarbeitungsmoduls 127 können die Radardaten beispielsweise in eine entsprechende für die Wanddiagnose durch das Diagnosemodul 107 benötigte Datenstruktur gebracht werden.

Wie oben beschrieben wird durch das Diagnosemodul 107 während der Wanddiagnose die oben beschriebenen Diagnoseergebnisse 109 erstellt. Die Diagnoseergebnisse 109 können hierbei beispielsweise die Objektposition 115 und/oder den Objekttyp 117 und/oder die Objekttiefe 119 und/oder die Objektausdehnung 121 eines in der zu untersuchenden Wand 105 ausgebildeten Objekts 113 und/oder den Wandtyp 123 der zu untersuchenden Wand 105 umfassen. Die entsprechend generierten Diagnoseergebnisse 109 können darauffolgend in der Anzeigeeinheit 111 des Messgeräts 100 angezeigt werden.

Gemäß einer Ausführungsform können zusätzlich zu den Radardaten 103 der Radarsensoreinheit 101 die oben beschriebenen zusätzlichen Sensorinformationen der zusätzlichen Sensoren in der Wanddiagnose des Diagnosemoduls 107 berücksichtigt werden. Eine entsprechende Vorverarbeitung der zusätzlichen Sensorinformationen durch das Vorverarbeitungsmodul 127 kann entsprechend ausgeführt werden.

In der gezeigten Ausführungsform umfasst das Diagnosemodul 107 ein Wandtypklassifizierungsmodul 129 und ein Objekterkennungsmodul 131. Das Vorverarbeitungsmodul 127 umfasst ein erstes Vorverarbeitungsmodul 135 und ein zweites Vorverarbeitungsmodul 137. Das erste Vorverarbeitungsmodul 135 umfasst eine S-Matrix Reduktion 155. Das zweite Vorverarbeitungsmodul 137 umfasst eine Hintergrundkorrektur 157, eine inverse Fast Fourier Transformation 159 und eine Fokussierung und Migration 161. In der Vorverarbeitung der Radardaten 103 durch das Vorverarbeitungsmodul 127 erfolgt zunächst eine Vorverarbeitung der Radardaten 103 durch das erste Vorverarbeitungsmodul 135 und die darin enthaltene S-Matrix Reduktion 155.

Das ersten Vorverarbeitungsmodul 135 erzeugt hierbei basierend auf den Radardaten 103 Eingabedaten 133. Die Eingabedaten 133 dienen als Eingabedaten für das Wandtypklassifizierungsmodul 129. Das Wandtypklassifizierungsmodul 129 führt hierbei basierend auf den Eingabedaten 133 eine Wandtypenklassifizierung der zu untersuchenden Wand 105 aus und generiert eine Wandtypinformation 139. In der Wandtypinformation 139 ist der in der Wandtypenklassifizierung bestimmte Wandtyp 123 der zu untersuchenden Wand 105 enthalten.

Darauffolgend wird das zweite Vorverarbeitungsmodul 137 basierend auf den Radardaten 103 und der Wandtypinformation 139 eine Vorverarbeitung ausgeführt. Hierbei wird unter Berücksichtigung des in der Wandtypinformation 139 ermittelten Wandtyps 123 eine Hintergrundkorrektur 157 der Radardaten 103 ausgeführt. Je nach Wandtyp 123 der zu untersuchenden Wand 105 können unterschiedliche Effekte auf die Radardaten 103 auftreten.

Durch die Hintergrundkorrektur 157 können diese Effekte, die primär auf dem jeweiligen Wandtyp 123 basieren und eine Objekterkennung beeinflussen können, korrigiert werden. Nach ausgeführter Hintergrundkorrektur kann durch Ausführung der inversen Fast Fourier Transformation 159 bzw. der Fokussierung und Migration 161 eine weitere Vorverarbeitung ausgeführt werden und erneute Eingabedaten 133 für das Objekterkennungsmodul 131 erstellt werden. Basierend auf den durch das zweite Vorverarbeitungsmodul 137 bereit gestellten Eingabedaten 133 führt das Objekterkennungsmodul 131 die Objekterkennung des in der zu untersuchenden Wand 105 angeordneten Objekts 113 aus und bestimmt wenigstens die Objektposition 115 und den Objekttyp 117 des jeweiligen Objekts 113. Zusätzlich kann durch das Objekterkennungsmodul 131 die Objekttiefe 119 und die Objektausdehnung 121 bestimmt werden.

Nach einer Ausführungsform ist das Diagnosemodul ferner eingerichtet, basierend auf den Radardaten eine Objekttiefe des Objekts innerhalb der Wand zu bestimmen, wobei die Objekttiefe durch einen Abstand des in der Wand ausgebildeten Objekts zu einer Oberfläche der Wand definiert ist.

Die Vorverarbeitung ist hierbei optional. In Abhängigkeit des für das Diagnosemodul 107 verwendeten Algorithmus können komplett unverarbeitete Radarechos verschiedener Frequenzen als Radardaten 103 und als Eingabedaten für das Diagnosemodul 107 genutzt werden. Alternativ können über mehrere Schritte verarbeitete Radardaten 103 vorverwendet werden. Die Vorverarbeitungsschritte umfassen hierbei beispielsweise die Transformation der Signale vom Frequenzraum in den Zeit- oder Distanzraum, Hintergrundabzug, Entrauschung und Normalisierung der Signale. Bei Radardaten 103, die in Form von komplexen Zahlen vorliegen, kann ausschließlich der Absolutwert verarbeitet werden. Alternativ oder zusätzlich können die Phaseninformation berücksichtigt werden.

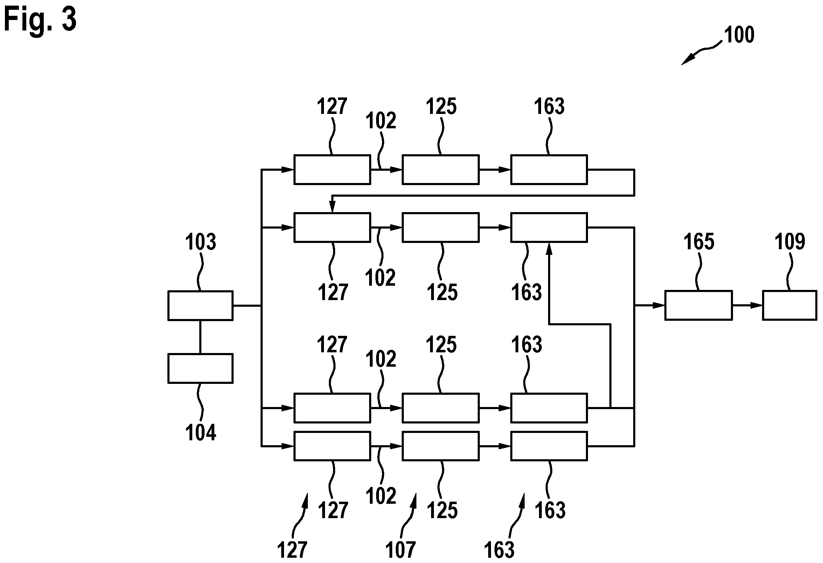

Fig. 3 zeigt eine weitere schematische Darstellung des Messgeräts 100 gemäß einer weiteren Ausführungsform.

In der gezeigten Ausführungsform umfasst das Diagnosemodul 107 eine Mehrzahl von parallel verlaufenden Verarbeitungspfaden 102. In jedem Verarbeitungspfad 102 ist ein Vorverarbeitungsmodul 127, das Diagnosemodul 107, beispielsweise umfassend das Wandtypklassifizierungsmodul 129 und/oder das Objekterkennungsmodul 131 gemäß der Ausführungsform in Fig, 2, und ein Nachverarbeitungsmodul 163.

In Fig. 3 werden primär die Radardaten 103 als Eingabedaten für die Wanddiagnose dargestellt. Zuzüglich zu den gezeigten Radardaten können jedoch auch die Zusatzinformationen der zusätzlichen Sensoren als Eingabedaten für die Wanddiagnose dienen. Hierbei können die unterschiedlichen Informationen der verschiedenen Sensortypen in den verschiedenen parallelen Verarbeitungspfaden 102 verarbeitet werden und die entsprechende Wanddiagnose getrennt auf den unterschiedlichen Sensorinformationen ausgeführt werden. Nach Abschluss der Wanddiagnose kann über ein Zusammenfassungsmodul eine Zusammenfassung der einzelnen Teilanalyseergebnisse zu den Diagnoseergebnissen 109 der Wanddiagnose zusammengefügt werden.

Alternativ oder zusätzlich können durch die verschiedenen Verarbeitungspfade 102 auch basierend auf den gleichen Sensorinformationen unterschiedliche Teilaspekte der Wanddiagnose durchgeführt werden.

Die einzelnen Verarbeitungspfade 102 können hierbei beispielsweise unterschiedliche Radardaten 103 verarbeiten, die während des Bewegens des Messgeräts 100 relativ zur Wand 105 für verschiedene Positionen des Messgeräts 100 relativ zur Wand 105 aufgenommen wurden. Die Radardaten 103, die somit unterschiedliche Bereiche der Wand 105 abbilden und zeitlich nacheinander während des Bewegens des Messgeräts 100 relativ zur Wand 105 aufgenommen wurde, können dann in den verschiedenen Verarbeitungspfaden 102 durch die gezeigten Module verarbeitet werden.

Die verschiedenen Verarbeitungspfade führen hierbei eine eigenständige Wanddiagnose durch, die wenigstens das Bestimmen der Objektposition 115 und/oder des Objekttyps 117 des in der Wand 105 angeordneten Objekts 113 umfassen.

Durch das Zusammenfassungsmodul 165 können die in den einzelnen Verarbeitungspfaden 102 bereitgestellten Teilergebnisse der eigenständigen Wanddiagnosen der unterschiedlichen Bereiche der Wand 105 einem zusammenhängenden Diagnoseergebnis 109 zusammengefasst werden. Das zusammenhängende Diagnoseergebnis beschreibt hierbei die Wanddiagnose eines zusammenhängenden Raumbereichs, der während des Bewegens des Messgeräts 100 relativ zur Wand 105 überstrichen und durch die entsprechenden aufgenommenen Radardaten 103 abgebildet wurde. Die parallele Verarbeitung der Radardaten 103 bzw. der zusätzlichen Sensorinformationen 104 der zusätzlichen Sensorelemente in den verschiedenen Verarbeitungspfaden 102 ermöglicht somit eine beschleunigte Wanddiagnose.

Alternativ hierzu können in den unterschiedlichen Verarbeitungspfaden 102 auch verschiedene Funktionen der Wanddiagnose ausgeführt werden. So kann beispielsweise in einem Verarbeitungspfad 102 die Wandtypenklassifizierung und das Bestimmen des Wandtypen 123 der zu untersuchenden Wand 105 ausgeführt werden. In einem weiteren Verarbeitungspfad 102 kann die Objekterkennung des in der Wand angeordneten Objekts 113 ausgeführt werden. Hierbei können die Objektdetektion mit der Bestimmung der Objektposition 115 und die Objektklassifikation mit der Bestimmung des Objekttypens 113 in einem Verarbeitungspfad 102 ausgeführt werden.

Alternativ hierzu kann dann auch die Objektdetektion und die Objektklassifikation in zwei getrennten Verarbeitungspfaden 102 ausgeführt werden. In weiteren Verarbeitungssträngen 102 können jeweils die Objekttiefenbestimmung, sprich die Bestimmung der Objekttiefe 119, und/oder die Bestimmung der Objektausdehnung 121 bewirkt werden. In dem Zusammenfassungsmodul 165 können die verschiedenen Teilergebnisse der Wanddiagnose in entsprechende Diagnoseergebnisse 109 zusammengefasst werden.

Das Diagnosemodul 107 kann hierbei in unterschiedliche künstliche Intelligenzen 125 aufgeteilt sein, wie dies bereits in der Ausführungsform in Fig. 2 dargestellt ist. Das Diagnosemodul 107 kann hierbei beispielsweise ein Wandtypenklassifizierungsmodul 129 und ein Objekterkennungsmodul 131 umfassen. Das Objekterkennungsmodul kann wiederum in ein Objektdetektionsmodul und ein Objektklassifikationsmodul aufteilt sein. Das Diagnosemodul 107 kann ferner ein Objekttiefenbestimmungsmodul und Objektausdehnungsmodul umfassen, die jeweils eingerichtet sind, die Objekttiefe 119 und die Objektausdehnung 121 zu bestimmen.

Die entsprechenden Module können jeweils als eigenständige künstliche Intelligenzen 125, beispielsweise neuronale Netze, ausgebildet sein. Alternativ können die verschiedenen Module Teile eines gesamten künstlichen neuronalen Netzes bilden, die gemäß aus dem Stand der Technik bekannten Strukturen zu einem gesamten neuronalen Netz verbunden sind.

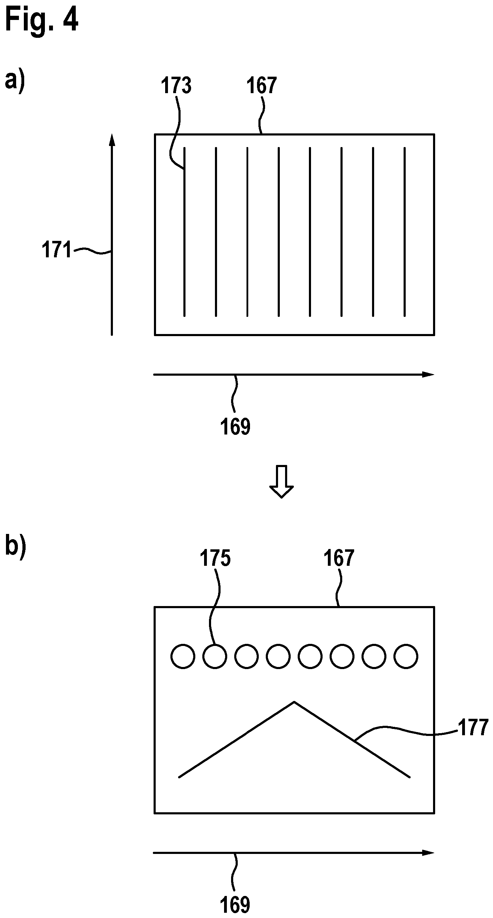

Fig. 4 zeigt eine schematische Darstellung einer Messung des Messgeräts 100 gemäß einer Ausführungsform.

Zur Vorverarbeitung können die Radardaten 103 bzw. die zusätzlichen Sensorinformationen 104 der übrigen Sensoren insbesondere zur numerischen Stabilisierung der nachfolgenden durch das Diagnosemodul 107 während der Wanddiagnose ausgeführten Schritte normalisiert werden. Hierzu können beispielsweise eine Amplitude und/oder Off-set-Kompensation ausgeführt werden. Ferner können zur Reduktion von Störelementen Filterung der Radardaten 103 und zur Reduktion der Datenrate die entsprechenden Sensordaten herabgetastet werden. Ferner können die Radardaten 103 bzw. die zusätzlichen Sensorinformationen 104 in den jeweilig benötigten Frequenzbereich bzw. Zeitbereich transformiert werden. Hierzu können aus dem Stand der Technik bekannte Verfahren angewendet werden.

Ferner können die aufgenommenen Radardaten 103 bzw. zusätzlichen Sensorinformationen 104 in zeitliche oder räumliche Fenster 167 aufgeteilt werden. Zeitliche Fenster 167 können hierbei durch das Aufnehmen der Radardaten 103 bzw. der zusätzlichen Sensorinformationen bzw. der vorverarbeiteten Radardaten 103 über ein festes Zeitintervall generiert werden. Räumliche Fenster 167 können hingegen aus einer Zuordnung der Radardaten 103 bzw. zusätzlichen Sensorinformationen 104 zu Positionen des Messgeräts 100 relativ zur Wand 105 entlang der Bewegungsrichtung 153 generiert werden.

Grafik a) der Fig. 4 zeigt eine derartige aus den oben beschriebenen Schritten ergebende Datenmatrix. Die in Grafik a) gezeigte Datenmatrix des Fensters 167 zeigt eine Mehrzahl von Sensordaten, die beispielsweise Radardaten 103 oder zusätzlichen Sensorinformationen 104 der weiteren Sensoren umfassen können, die entlang einer Frequenzkanalachse 171 bzw. entlang einer Raum-/Zeitachse 169 aufgetragen sind.

Eine Breite der zeitlichen Fenster 167 kann hierbei derart gewählt werden, dass unterschiedliche Abtastraten der Sensoren ausgeglichen werden können und häufig genug ein neues Fenster 167 bereitgestellt werden kann, sodass eine Anzeige der Diagnoseergebnisse 109 der Wanddiagnose in der Anzeigeeinheit 111 ohne eine zu große zeitliche Verzögerung während der durchgeführten Messung oder kurz nach Beendigung der Messung des Messgeräts 100 erfolgen kann.

Hierzu kann eine Rate von 2 bis 20 Fenster pro Sekunde der Datenaufnahme der Sensordaten vorteilhaft sein. Für räumliche Fenster können die räumlichen Abtastraten derart gewählt werden, dass die gewünschte örtliche Genauigkeit erreicht werden kann. Vorteilhaft können hierbei 1 mm bis 1 cm Abtastraten sein. Dies bedeutet, dass alle 1 mm bis 1 cm einer Bewegung des Messgeräts 100 entlang der Bewegungsrichtung 153 entsprechende Sensordaten aufgenommen werden.

Eine Breite der räumlichen Fenster 167 kann derart gewählt werden, dass zusammenhängende Informationen zu einem Objekt 113 in einem Fenster enthalten sind. Vorteilhaft kann hierbei eine Breite von 1 cm bis 20 cm der jeweiligen räumlichen Fenster 167 sein. Hieraus ergeben sich 4 bis 100 Messwerte pro Fenster 167. Dies ermöglicht eine weitere effiziente algorithmische Verarbeitung der entsprechend aufgenommenen Radardaten 103 bzw. zusätzlichen Sensorinformationen durch das Diagnosemodul 107.

Ein weiteres zeitliches Fenster 167 bzw. räumliches Fenster 167 kann hierbei bereitgestellt werden, sobald einer oder mehrere Abtastpunkte zur Verfügung stehen.

Das Diagnosemodul 107 kann derart ausgerichtet sein, dass als Eingabedaten, beispielsweise auch eines jeden Verarbeitungspfad 102 der Ausführungsform in Fig. 3, eine der Fenstergröße des jeweiligen räumlichen oder zeitlichen Fensters 167 entsprechende Matrix als Eingabedaten aufzunehmen. Die entsprechenden Eingabedaten können hierbei gemäß der Ausführungsform der Fig. 2 die jeweils vorverarbeiteten Sensordaten, sprich Radardaten 103 und zusätzliche Sensorinformationen 104 der zusätzlichen Sensoren, umfassen.

Wie oben ausgeführt, kann die Wanddiagnose durch das Diagnosemodul 107 basierend auf einer entsprechend trainierten künstlichen Intelligenz ausgeführt werden. Alternativ können auch verschiedene Verarbeitungspfade durch Regelbasierte Algorithmen berechnet werden. Auch ist innerhalb eines Verarbeitungspfads 102 eine Kombination aus künstlicher Intelligenz und regelbasiertem Algorithmus in Form einer Parallelschaltung oder Verkettung möglich.

Die Diagnoseergebnisse 109 der Wanddiagnose können als Zahlenwerte, Vektoren oder Matrizen ausgeprägt sein. Ferner kann für die Objektdetektion die Wahrscheinlichkeit einer Detektion, bzw. für die Wandtypenklassifikation bzw. die Objektklassifikation eine Wahrscheinlichkeit der angegebenen Objektklassen bzw. Wandtypenklassen angegeben sein. Gleiches kann für die Positions- und/oder Tiefenbestimmung gelten, für die ebenfalls entsprechende Wahrscheinlichkeitswerte angegeben werden können.

Werden neben den Radardaten 103 die zusätzlichen Sensorinformationen der weiteren Sensortypen in einem Verarbeitungspfad 102 verarbeitet, so können diese entweder innerhalb der künstlichen Intelligenz 125 zusammengeführt oder durch regelbasierte Kombinationen kombiniert werden.

In der Nachverarbeitung jedes Verarbeitungspfads 102, der Ausführungsform in Fig. 3, können mehrere Algorithmusergebnisse, die auf mehreren Fenstern 167 basieren, durch das Zusammenfassungsmodul 165 zusammengefasst werden. Diese Zusammenfassung kann insbesondere durch Mehrheitsbildung, Summenbildung oder auch Multiplikation aufeinanderfolgender Wahrscheinlichkeitswerte realisiert werden.

Ferner kann durch Clustern von mehreren Ergebnissen, beispielsweise von mehreren nahe beieinander liegend detektierten Objekten, erkannt werden, bei welchen Objekten es sich um dasselbe Objekt handelt, sodass diese nicht fälschlicherweise mehrfach erkannt werden.

Ebenso ist es möglich, bei der Zusammenfassung der Ergebnisse aus mehreren Fenstern 167 multiplikativ eine Gewichtungsfunktion 177 anzuwenden. Vorteilhafterweise können hierbei die Diagnoseteilergebnisse 175, die entsprechenden Datenpunkten im Raum entsprechen, mit Bezug auf eine Positionierung der Diagnoseteilergebnisse 175 relativ zu einem Mittelpunkt des jeweiligen Fensters 167 gewichtet werden. Diese ist beispielhaft in der Grafik b) dargestellt, in der die einzelnen Diagnoseteilergebnisse 175 gemäß der gezeigten Gewichtungsfunktion 177 mit Bezug auf den Mittelpunkt des gezeigten Fensters 167 gewichtet sind.

Gemäß einer Ausführungsform können die Ergebnisse eines Verarbeitungspfads 102 nach der Nachverarbeitung 163 auf die Erweiterung eines anderen Verarbeitungspfad 102s Einfluss nehmen. Hierbei können Gewichtungsparameter angepasst werden, die für jedes Fenster von dem jeweiligen Ergebnis aus dem Verarbeitungspfad 102 abhängen können.

Beispielsweise kann das Ergebnis einer Objektklassifikation, in der der Objekttyp 117 eines in der Wand 105 angeordneten Objekts definiert ist, genutzt werden, um das Gewicht einer Wandtypenklassifikation, in der der Wandtyp 123 der jeweiligen Wand 105 bestimmt wird, in der Nachverarbeitung an Stellen ohne Objekte 113 zu erhöhen, da die jeweiligen Radardaten 103 an diesen Stellen weniger durch Reflektionen der Objekte 113 beeinflusst sind.

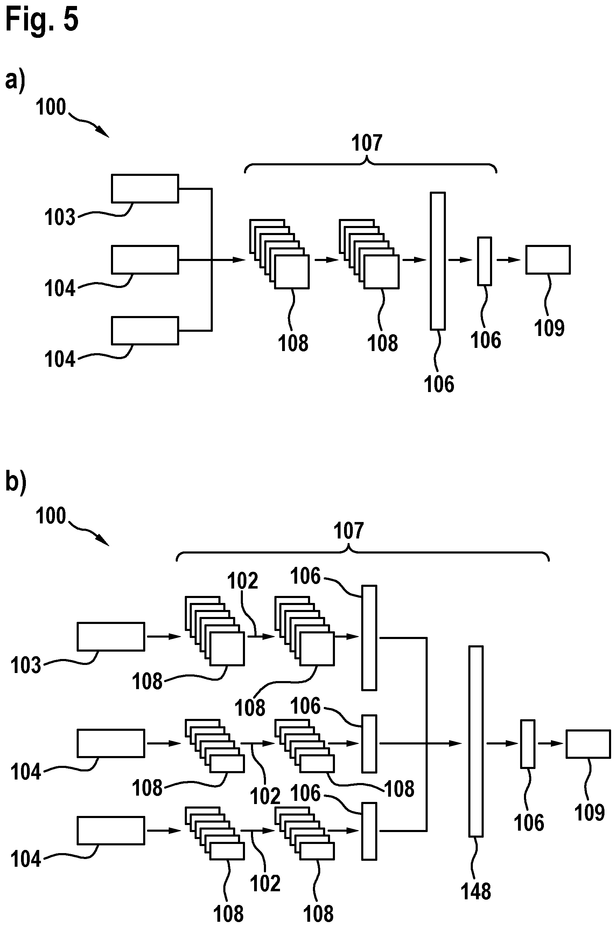

Fig. 5 zeigt eine weitere schematische Darstellung des Messgeräts 100 gemäß einer weiteren Ausführungsform.

Die Grafiken a) und b) der Fig. 5 zeigen zwei verschiedene Alternativen einer gemeinsamen Datenverarbeitung von Radardaten 103 und zusätzlichen Sensorinformationen 104 durch das Diagnosemodul 107.

In Grafik b) wird eine gemeinsame Verarbeitung der Radardaten 103 und der zusätzlichen Sensorinformationen 104 der zusätzlichen Sensoren durch das Diagnosemodul 107 dargestellt. Hierzu werden die Radardaten 103 und die zusätzlichen Sensorinformationen 104 gemeinsam als Eingabedaten des als künstliche Intelligenz, insbesondere als künstliches neuronales Netz, ausgebildet Diagnosemoduls 107 verwendet. Das Diagnosemodul 107 umfasst hier mehrere Faltungsschichten 108 und mehrere dichte Schichten 106. Über die Faltungsschichten 108 und die dichten Schichten 106 werden die Radardaten 103 und die zusätzlichen Sensorinformationen 104 gemeinsam als Eingabedaten verarbeitet. Als Ausgabedaten des Diagnosemoduls 107 werden hierauf basierend die oben bereits erwähnten Diagnoseergebnisse 109 erstellt.

In Grafik b) werden die Radardaten 103 und die zusätzlichen Sensorinformationen 104 hingegen als eigenständige Eingabedaten des Diagnosemoduls 107 verwendet. Das Diagnosemodul 107 wird zu mehrere Verarbeitungspfade 102. Die Verarbeitungspfade 102 umfassen jeweils mehrere Faltungsschichten 108 und wenigstens eine dichte Schicht 106. In den verschiedenen Verarbeitungspfaden 102 wird basierend auf den Radardaten 103 bzw. den zusätzlichen Sensorinformationen 104 getrennt voneinander jeweils eine Wanddiagnose durch das Diagnosemodul 107 erstellt.

In einer zusätzlichen Verkettungsschicht 148 werden die Teilergebnisse der Teildiagnosen der verschiedenen Verarbeitungspfade 102 zusammengefügt und einer letzten dichten Schicht 106 zugeführt. Die Ausgabedaten des Diagnosemoduls 107 entsprechen den oben beschriebenen Diagnoseergebnissen 109.

Das entsprechend ausgebildete Diagnosemodul 107 ist eingerichtet, basierend auf den Radardaten 103 und den zusätzlichen Sensorinformationen 104 eine wie oben beschriebene Wanddiagnose mit den oben beschriebenen Merkmalen auszuführen.

In der gezeigten Ausführungsform ist das Diagnosemodul 107 als ein künstliches neuronales Netz, insbesondere als ein Faltungsnetzwerk, ausgebildet. Entsprechende Netzwerkarchitekturen mit Faltungsschichten 108, dichten Schichten 106 und Verkettungsschichten 148 sind aus dem Stand der Technik bekannt.

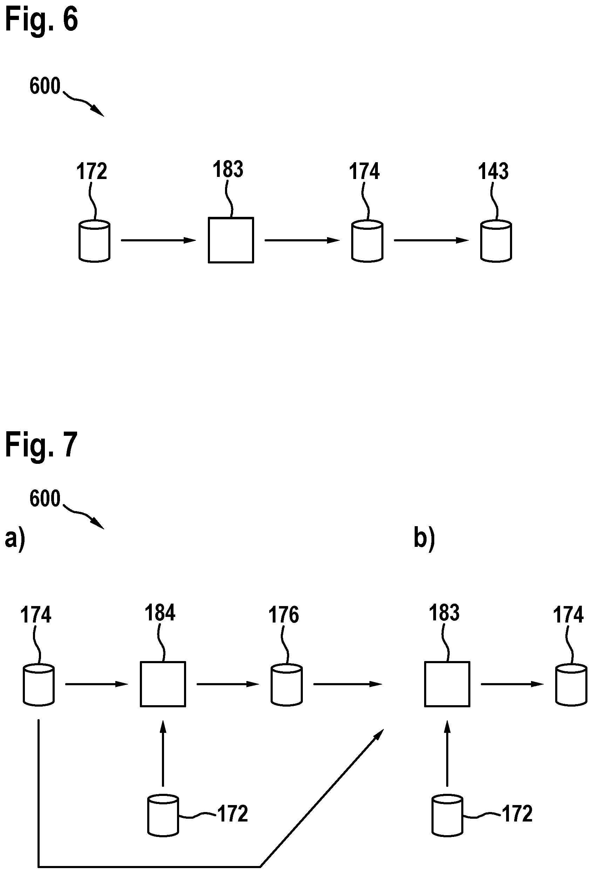

Fig. 6 zeigt eine schematische Darstellung eines Systems 600 zum Erzeugen eines Trainingsdatensatzes 143 gemäß einer Ausführungsform.

In der gezeigten Ausführungsform umfasst das System 600 zum Erzeugen eines Trainingsdatensatzes 143 ein Klassifikatormodul 183. Das Klassifikatormodul 183 ist als eine künstliche Intelligenz eingerichtet, die darauf trainiert ist, basierend auf unklassifizierten Sensordaten 172 klassifizierte Sensordaten 174 zu erzeugen.

Die unklassifizierten Sensordaten 172 bilden hierbei zu untersuchende Wände 105 und darin angeordnete Objekte 113 ab. Die unklassifizierten Sensordaten 172 können die Radardaten 103 bzw. zusätzlichen Sensorinformationen 104 umfassen. Die unklassifizierten Sensordaten 172 können hierbei auf einer Mehrzahl von Messungen einer Mehrzahl von Messgeräten 100 einer Mehrzahl verschiedener Wände 105 basieren.

Das Klassifikatormodul 183 ist erfindungsgemäß über einen Semi-Supervised-Learning-Prozess darauf trainiert, für unklassifizierte Sensordaten eine Klassifizierung in Bezug auf den Wandtyp 123 der Wand 105 und/oder die Objektposition 115 und/oder den Objekttyp 117 des Objekts 113 zu bestimmen.

Basierend auf den durch das Klassifikatormodul 183 klassifizierten Sensordaten 174 kann darauffolgend durch das System 600 ein entsprechender Trainingsdatensatz 143 erzeugt werden.

Das Klassifikatormodul 183 kann ferner darauf trainiert sein, die unklassifizierten Sensordaten 172 neben dem Wandtyp 123, der Objektposition 115 und/oder dem Objekttyp 117 in Bezug auf die Objekttiefe 119 und/oder die Objektausdehnung 121 zu klassifizieren

Fig. 7 zeigt eine weitere schematische Darstellung des Systems 600 zum Erzeugen eines Trainingsdatensatzes 143 gemäß einer weiteren Ausführungsform.

Die Ausführungsform in Fig. 7 basiert auf der Ausführungsform in Fig. 6 und umfasst alle dort gezeigten Merkmale.

In Graphik a) ist ein Trainingsprozess des Klassifikatormoduls 183 dargestellt. Graphik b) stellt hingegen den tatsächlichen Anwendungsprozess des entsprechend nach dem Trainingsverfahren der Graphik a) trainierten Klassifikatormoduls 183.

Zum Training des Klassifikatormoduls 183 wird ein Trainingsdatensatz basierend auf klassifizierten Sensordaten 174 und Sensordaten mit einer Pseudoklassifizierung 176 generiert. Das Klassifikatormodul 183 wird darauffolgend basierend auf den klassifizierten Sensordaten 174 und den Sensordaten mit Pseudoklassifizierung 176 zum Klassifizieren von unklassifizierten Sensordaten 172 und dem Erzeugen von klassifizierten Sensordaten 174 trainiert.

Die Sensordaten mit Pseudoklassifizierung 176 werden hierbei durch ein Pseudoklassifizierungsmodul 184 erzeugt. Das Pseudoklassifizierungsmodul 184 ist als eine trainierte künstliche Intelligenz ausgebildet, die darauf trainiert ist, basierend auf unklassifizierten Sensordaten 172 Sensordaten mit Pseudoklassifzierung 176 zu erzeugen. Die Sensordaten mit Pseudoklassifizierung 176 sind hierbei als klassifizierte Sensordaten zu verstehen, die durch das Pseudoklassifizierungsmodul 184 generiert wurden.

Das Pseudoklassifizierungsmodul 184 ist wiederum auf klassifizierten Sensordaten 174 darauf trainiert worden, basierend auf unklassifizierten Sensordaten 172 Sensordaten mit Pseudoklassifizierung 176 zu erzeugen.

Das Klassifikatormodul 183 wird darauffolgend basierend auf den klassifizierten Sensordaten 174 und die durch das Pseudoklassifizierungsmodul 184 generierten Sensordaten mit Pseudoklassifizierung 176 klassifiziert.

Die klassifizierten Sensordaten 174 der Graphik a), die für das Training des Pseudoklassifizierungsmodul 184 und des Klassifikatormoduls 183 verwendet werden, entsprechen hierbei nicht den klassifizierten Sensordaten 174 der Graphik b), die durch das trainierte Klassifikatormodul 183 basierend auf den unklassifizierten Sensordaten 172 generiert werden. Die klassifizierten Sensordaten 174 des in der Graphik a) dargestellten Trainings sind hingegen händisch klassifizierte Sensordaten, die in einem Klassifizierungsvorgang durch einen Experimentator klassifiziert wurden.

Die während des in der Graphik a) zum Generieren der Sensordaten mit Pseudklassifizierung 176 verwendete unklassifizierten Sensordaten 172 entsprechen ebenfalls nicht dem während der Verwendung des trainierten Klassifikatormoduls 183 zum Erzeugen des Trainingsdatensatzes verwendeten unklassifizierten Sensordaten 172.

Die unklassifizierten Sensordaten 172 der Graphiken a) und b) können identisch sein, müssen dies aber nicht.

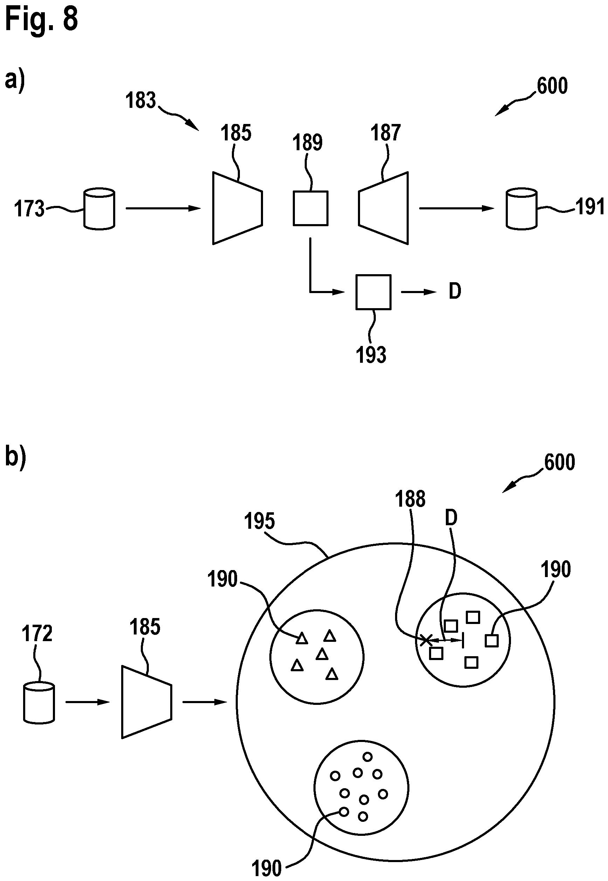

Fig. 8 zeigt eine weitere schematische Darstellung des Systems 600 zum Erzeugen eines Trainingsdatensatzes 143 gemäß einer weiteren Ausführungsform.

In der gezeigten Ausführungsform ist das Klassifikatormodul 183 als ein Autoencoder mit einem Encoder-Modul 185 und einem Decoder-Modul 187 ausgebildet. Über das Encoder-Modul ist das Klassifikatormodul 183 eingerichtet, basierend auf Sensordaten 173 entsprechende Latentraum-Repräsentationen 189 zu generieren. Die Latentraum-Repräsentationen 189 entsprechen hierbei dimensionsreduzierten Darstellungen der Sensordaten 173. Im Stand der Technik des maschinellen Lernens sind derartige Latentraum-Repräsentationen als Vektordarstellungen ausgebildet. Die Sensordaten 173 können hierbei unklassifizierte und/oder klassifizierte Sensordaten 172, 174 umfassen.

Das Decoder-Modul 187 ist hingegen eingerichtet, die in den Latentraum-Repräsentationen 189 kodierte Information der Sensordaten 173 zu dekodieren und basierend auf den Latentraum-Repräsentationen 189 generierte Sensordaten 191 zu generieren. Über das Decoder-Modul 187 können somit neue Sensordaten generiert werden, die ausschließlich auf Latentraum-Repräsentationen 189 basieren und nicht durch Messungen entsprechender Sensoreinheiten erzeugt wurden.

Zum Klassifizieren von unklassifizierten Sensordaten 172 und dem Erzeugen von klassifizierten Sensordaten 174 umfasst das Klassifikatormodul 183 ferner ein Abstandsermittlungsmodul 193. Über das Abstandsermittlungsmodul 193 können Abstände zwischen den Latentraum-Repräsentationen 189 im Latentraum 195 ermittelt werden.

Graphik b) zeigt eine derartige Klassifizierung von unklassifizierten Sensordaten 172 über eine Abstandsermittlung entsprechender Latentraum-Repräsentationen im Latentraum 195.

Zunächst wird durch das entsprechend trainierte Encoder-Modul 185 für die unklassifizierten Sensordaten 172 eine entsprechende Latentraum-Repräsentation 188 der unklassifizierten Sensordaten 172 ermittelt. In Graphik b) sind im Latentraum 195 ferner drei Gruppen von Latentraum-Repräsentationen 190 von klassifizierten Sensordaten 174 dargestellt. Die Latentraum-Repräsentationen 190 sind in drei zueinander beabstandeten Gruppen zusammengefasst. Die Latentraum-Repräsentationen 190 der drei verschiedenen Gruppen stellen jeweils klassifizierte Sensordaten 174 dar. Die Latentraum-Repräsentationen 190 einer gemeinsamen Gruppe stellen hierbei Sensordaten einer gemeinsamen Objektklasse dar.

Zum Klassifizieren der unklassifizierten Sensordaten 172 werden durch das Abstandermittlungsmodul 193 darauffolgend Abstände D zwischen den Latentraum-Repräsentationen 188 der unklassifizierten Sensordaten 172 zu den Latentraum-Repräsentationen 190 der klassifizierten Sensordaten 174 ermittelt. Ist nun der ermittelte Abstand D der Latentraum-Repräsentationen 188 zu den Latentraum-Repräsentationen 190 der klassifizierten Sensordaten 174 kleiner oder gleich einem vorbestimmten Grenzwert, so wird den jeweiligen unklassifizierten Sensordaten 172 die jeweilige Klassifizierung der klassifizierten Sensordaten 174 zugewiesen, zu denen der Abstand D der jeweiligen Latentraum-Repräsentation 188 geringer oder gleich dem vorbestimmten Grenzwert ist.

In dem die Klassifizierungen der klassifizierten Sensordaten 174 bereits bekannt sind, können diese als zusätzliche Information in die entsprechenden Latentraum-Repräsentationen 190 integriert werden. Hierüber kann dann die Abstandsermittlung durch das Abstandsermittlungsmodul 193 der verschiedenen Latentraum-Repräsentationen 188, 190 im Latentraum 195, beispielsweise durch eine euklidische Abstandsmetrik, ausgeführt werden. Latentraum-Repräsentationen 190, die klassifizierte Sensordaten 174 gleicher Klassifikation darstellen, weisen aufgrund der gleichen Klassifikationsinformation im Latentraum einen geringen Abstand zueinander auf und sind in den in Graphik B gezeigten Gruppen angeordnet. Über die Abstandsermittlung D kann somit die Klassifizierung der unklassifizierten Sensordaten 172 erfolgen.

In Graphik b) ist eine derartige Klassifizierung dargestellt. Die Latentraum-Repräsentation 188 der unklassifizierten Sensordaten 172 ist zu den mittels der in Quadrate dargestellten Latentraum-Repräsentationen 190 der klassifizierten Sensordaten 174 mit einem Abstand D beabstandet, der geringer als der vordefinierte Grenzwert ist. Dies ist dadurch gekennzeichnet, dass die mit dem X gekennzeichnete Latentraum-Repräsentation 188 in die Gruppe der mit den quadratischen Symbolen gekennzeichneten Latentraum-Repräsentationen 190 angeordnet ist.

Latentraum-Repräsentationen 188, die hingegen zu den Latentraum-Repräsentationen 190 der klassifizierten Sensordaten 174 einen größeren Abstand D als der vordefinierte Grenzwert aufweisen, können über das dargestellte Verfahren nicht klassifiziert werden. Derartige unklassifizierte Sensordaten 172 können beispielsweise für den zu generierenden Trainingsdatensatz 143 unberücksichtigt bleiben.

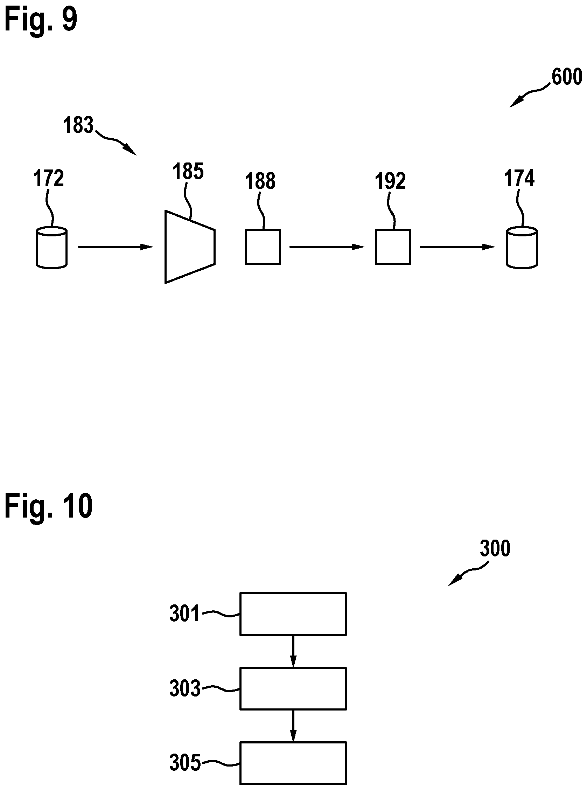

Fig. 9 zeigt eine weitere schematische Darstellung des Systems 600 zum Erzeugen eines Trainingsdatensatzes 143 gemäß einer weiteren Ausführungsform.

Die in Fig. 9 dargestellte Ausführungsform basiert auf der Ausführungsform in Fig. 6 und umfasst alle dort beschriebenen Merkmale. In der gezeigten Ausführungsform umfasst das Klassifikatormodul 183 ein gemäß der Ausführungsform in Fig. 8 entsprechend trainiertes Encoder-Modul 185. Das Encoder-Modul 185 ist hierbei eingerichtet, basierend auf Sensordaten 173 entsprechende Latentraum-Repräsentationen 189 zu generieren. Die Sensordaten 173 können hierbei unklassifizierte und klassifizierte Sensordaten 172, 174 umfassen. Ferner umfasst das Klassifikatormodul 183 ein Klassifizierungsmodul 192.

Zum Klassifizieren von unklassifizierten Sensordaten 172 wird somit zunächst durch das entsprechende trainierte Encoder-Modul 185 Latentraum-Repräsentationen 188 der unklassifizierten Sensordaten 172 generiert.

Durch das Klassifizierungsmodul 192 kann basierend auf den Latentraum-Repräsentationen 188 der unklassifizierten Sensordaten 172 entsprechend klassifizierte Sensordaten 174 erzeugt werden. Das Klassifizierungsmodul 192 ist hierbei als eine künstliche Intelligenz ausgebildet und darauf trainiert, basierend auf Latentraum-Repräsentationen 188 von unklassifizierten Sensordaten die entsprechende Klassifizierung der Sensordaten vorherzusagen. Das Klassifizierungsmodul 192 kann hierzu auf Latentraum-Repräsentationen 190 von klassifizierten Sensordaten 174 darauf trainiert worden sein, basierend auf Latentraum-Repräsentationen 188 von unklassifizierten Sensordaten 172 entsprechende Klassifizierungen vorherzusagen.

Fig. 10 zeigt ein Flussdiagramm eines Verfahrens 300 zum Erzeugen eines Trainingsdatensatzes 143 gemäß einer Ausführungsform.

Zum Erzeugen eines Trainingsdatensatzes werden in einem ersten Verfahrensschritt 301 zunächst unklassifizierte Sensordaten 172 wenigstens einer Sensoreinheit 101 des Messgeräts 100 durch das Klassifikatormodul 183 empfangen.

In einem weiteren Verfahrensschritt 303 werden die unklassifizierten Sensordaten 172 klassifiziert und klassifizierte Sensordaten 174 durch das Klassifikatormodul 183 bereitgestellt. Das Klassifikatormodul 183 ist hierbei als eine künstliche Intelligenz ausgebildet und über ein Semi-supervised learning trainiert, für unklassifizierte Sensordaten 172 eine Klassifizierung in Bezug auf de Wandtyp 123 der Wand 105 und/oder die Objektposition 115 und/oder den Objekttyp 117 des Objekts 113 zu bestimmen.

In einem weiteren Verfahrensschritt 305 werden die derart klassifizierten Sensordaten 174 zu einem Trainingsdatensatz 143 zusammengefasst oder zu einem bereits bestehenden Trainingsdatensatz 143 hinzugefügt.

Gemäß einer Ausführungsform kann die Klassifizierung neben dem Wandtyp 123, der Objektposition 115 und/oder dem Objekttyp 117 in Bezug auf die Objekttiefe 119 und/oder die Objektausdehnung 121 erfolgen.

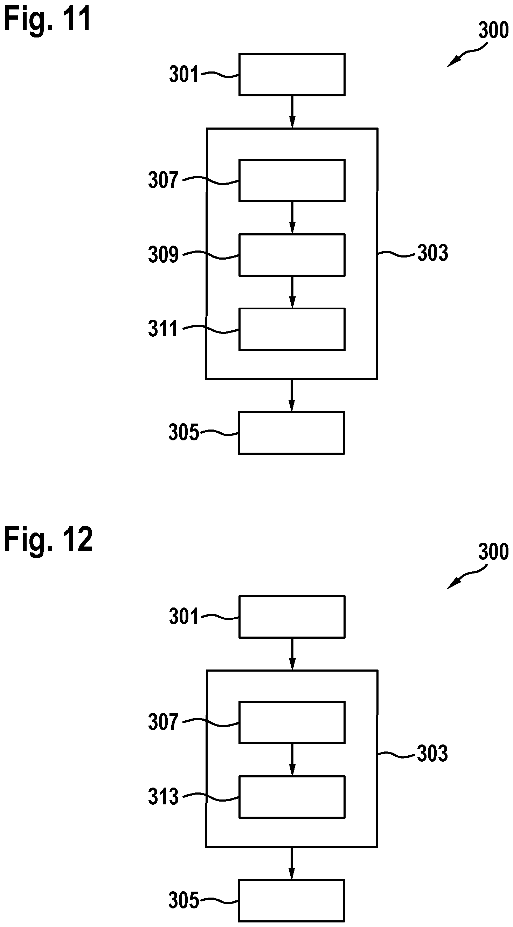

Fig. 11 zeigt ein weiteres Flussdiagramm des Verfahrens 300 zum Erzeugen eines Trainingsdatensatzes 143 gemäß einer weiteren Ausführungsform.

Die in Fig. 11 gezeigte Ausführungsform basiert auf der Ausführungsform in Fig. 10 und umfasst alle dort beschriebenen Verfahrensschritte.

In der gezeigten Ausführungsform werden zum Klassifizieren 303 in einem Verfahrensschritt 307 durch das Klassifikatormodul 183 für die zu unklassifiziernden Sensordaten 172 Latentraum-Repräsentationen 188 generiert.

In einem weiteren Verfahrensschritt 309 werden durch das Abstandsermittlungsmodul 193 Abstände D zwischen den Latentraum-Repräsentationen 188 der unklassifizierten Sensordaten 172 zu Latentraum-Repräsentationen 190 von klassifizierten Sensordaten 174 ermittelt.

In einem weiteren Verfahrensschritt 311 werden die unklassifizierten Sensordaten 172 in Bezug auf den Wandtyp 123 und/oder die Objektposition 115 und/oder den Objekttyp 117 basierend auf den Abständen D der Latentraum-Repräsentationen 188 der unklassifizierten Sensordaten 172 zu den Latentraum-Repräsentationen 190 der klassifizierten Sensordaten 174 klassifiziert. Hierbei werden die unklassifizierten Sensordaten 172 gemäß einer Klassifikation der klassifizierten Sensordaten 174 entsprechend klassifiziert, falls die Abstände D der Latentraum-Repräsentationen 188 der unklassifzierten Sensordaten 172 zu den Latentraum-Repräsentationen 190 der klassifzierten Sensordaten 174 kleiner oder gleich einem vordefinierten Grenzwert sind.

Fig. 12 zeigt ein weiteres Flussdiagramm des Verfahrens 300 zum Erzeugen eines Trainingsdatensatzes 143 gemäß einer weiteren Ausführungsform.

Die Ausführungsform in Fig. 12 basiert auf der Ausführungsform in Fig. 10 und umfasst alle dort beschriebenen Merkmale.

In der gezeigten Ausführungsform werden zum Klassifizieren 303 der unklassifizierten Sensordaten 172 im Verfahrensschritt 307 die Latentraum-Repräsentationen 188 der unklassifizierten Sensordaten 172 generiert. In einem weiteren Verfahrensschritt 313 werden die unklassifizierten Sensordaten 172 in Bezug auf den Wandtyp 123 und/oder die Objektposition 11 und/oder den Objekttyp 117 basierend auf den Latentraum-Repräsentationen 188 der unklassifizierten Sensordaten 172 durch das Klassifizierungsmodul 192 klassifiziert. Das Klassifizierungsmodul 192 ist hierbei als eine künstliche Intelligenz ausgebildet und darauf trainiert, basierend auf Latentraum-Repräsentationen 188 unklassifizierter Sensordaten 172 entsprechende Klassifizierungen der Sensordaten zu bestimmen.

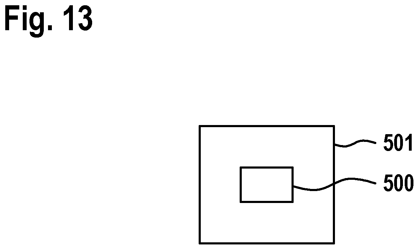

Fig. 13 zeigt eine schematische Darstellung eines Computerprogrammprodukts 500, umfassend Befehle, die bei der Ausführung des Programms durch eine Datenverarbeitungseinheit diese veranlassen, das Verfahren 300 zum Erzeugen eines Trainingsdatensatzes 143 auszuführen.

Das Computerprogrammprodukt 500 ist in der gezeigten Ausführungsform auf einem Speichermedium 501 gespeichert. Das Speichermedium 501 kann hierbei ein beliebiges aus dem Stand der Technik bekanntes Speichermedium sein.

## Patentansprüche

1. Computerimplementiertes Verfahren (300) zum Erzeugen eines Trainingsdatensatzes (143) für ein Training einer künstlichen Intelligenz (125) zum Betreiben eines Messgeräts (100), insbesondere eines Wanddiagnosegeräts, umfassend:
Empfangen (301) von unklassifizierten Sensordaten (172) wenigstens einer Sensoreinheit (101) eines Messgeräts (100) durch ein Klassifikatormodul (183), wobei die unklassifizierten Sensordaten (172) eine zu diagnostizierende Wand (105) mit einem Wandtyp (123) abbilden, und
wobei in der Wand (105) in einer Objektposition (115) ein Objekt (113) eines Objekttyps (117) angeordnet ist;
Klassifizieren (303) der unklassifizierten Sensordaten (172) und Bereitstellen von klassifizierten Sensordaten (174) durch ein Klassifikatormodul (183), wobei das Klassifikatormodul (183) als eine künstliche Intelligenz ausgebildet und über ein Semi-Supervised Learning trainiert ist, für unklassifizierte Sensordaten (172) eine Klassifizierung in Bezug auf den Wandtyp (123) der Wand (105) und/oder die Objektposition (115) und/oder den Objekttyp (117) des Objekts (113) zu bestimmen; und Hinzufügen (305) der klassifizierten Sensordaten (174) zu einem Trainingsdatensatz (143).

2. Verfahren (300) nach Anspruch 1, wobei das Klassifikatormodul (183) basierend auf klassifizierten Sensordaten (174) und Sensordaten (176) mit Pseudoklassifizierungen trainiert wurde, für unklassifizierte Sensordaten (172) entsprechende Klassifizierungen zu bestimmen, wobei die Pseudoklassifizierungen durch ein Pseudoklassifizierungsmodul (184) basierend auf unklassifizierten Sensordaten (172) vorhergesagt wurden, und wobei das Pseudoklassifizierungsmodul (184) als eine künstliche Intelligenz ausgebildet und auf klassifizierten Sensordaten (174) trainiert ist, für unklassifizierte Sensordaten (172) Pseudoklassifizierungen zu bestimmen.

3. Verfahren (300) nach Anspruch 1, wobei das Klassifizieren (303) umfasst:
Generieren (307) von Latentraum-Repräsentationen (188) der unklassifizierten Sensordaten (172) in einem Latentraum (195) durch das Klassifikatormodul (183), wobei Latentraum-Repräsentationen (188. 190) von unklassifzierten oder klassifizierten Sensordaten (172, 174) als dimensionsreduzierte Darstellungen der Sensordaten (172,174) ausgebildet sind;
Ermitteln (309) von Abständen (D) zwischen den Latentraum-Repräsentationen (188) der unklassifizierten Sensordaten (172) zu Latentraum-Repräsentationen (190) von klassifizierten Sensordaten (174) im Latentraum (195) durch ein Abstandsermittlungsmodul (193);
Klassifizieren (311) der unklassifizierten Sensordaten (172) in Bezug auf den Wandtyp (123) der Wand (105) und/oder die Objektposition (115) und/oder den Objekttyp (117) des Objekts (113) basierend auf den Abständen (D) der Latentraum-Repräsentationen (188) der unklassifizierten Sensordaten (172) zu den Latentraum-Repräsentationen (190) der klassifizierten Sensordaten (174) im Latentraum (195), wobei die unklassifizierten Sensordaten (172) einer Klassifikation der klassifizierten Sensordaten (174) entsprechend klassifiziert werden, falls die Abstände (D) der Latentraum-Repräsentationen (188) der unklassifizierten Sensordaten (172) zu den Latentraum-Repräsentationen (190) der klassifizierten Sensordaten (174) im Latentraum (195) kleiner oder gleich einem vordefinierten Grenzwert sind.

4. Verfahren (300) nach Anspruch 1, wobei das Klassifizieren (303) umfasst:
Generieren (307) von Latentraum-Repräsentationen (188) der unklassifizierten Sensordaten (172) in einem Latentraum (195) durch das Klassifikatormodul (183) , wobei Latentraum-Repräsentationen (188. 190) von unklassifzierten oder klassifizierten Sensordaten (172, 174) als dimensionsreduzierte Darstellungen der Sensordaten (172,174) ausgebildet sind;
Klassifizieren (313) der unklassifizierten Sensordaten (172) in Bezug auf den Wandtyp (123) der Wand (105) und/oder die Objektposition (115) und/oder den Objekttyp (117) des Objekts (113) basierend auf den Latentraum-Repräsentationen (188) der unklassifizierten Sensordaten (172) durch ein Klassifizierungsmodul (192), wobei das Klassifizierungsmodul (192) als eine künstliche Intelligenz ausgebildet und
auf Latentraum-Repräsentationen (190) von klassifizierten Sensordaten (174) trainiert ist, eine Klassifizierung der jeweiligen Sensordaten zu bestimmen.

5. Verfahren (300) nach Anspruch 4, wobei das Klassifikatormodul (183) als ein Generative Adversarial Network GAN, insbesondere als ein Autoencoder mit einem Encoder-Modul (185) und einem Decoder-Modul (187), ausgebildet ist.

6. Verfahren (300) nach einem der voranstehenden Ansprüche, wobei die Sensordaten (172, 174) Radardaten (103) eines Radarsensors und/oder Daten eines Induktionssensors und/oder eines Wirbelstromsensors und/oder eines Kapazitätssensors und/oder eines Wechselstromsensors und/oder eines NMR-Sensors und/oder eines Ultraschallsensors umfassen.

7. Verfahren (300) nach einem der voranstehenden Ansprüche, wobei die Klassifikation der Sensordaten (172, 174) ferner in Bezug auf eine Objekttiefe (119) und/oder eine Objektausdehnung (121) des Objekts (113) erfolgt.

8. Verfahren (300) nach einem der voranstehenden Ansprüche, wobei Objektklassen des Objekttyps (117) des Objekts (113) umfassen: Metall-/Nichtmetallobjekt, Kabel für Niederspannung, Kabel mit einphasigem AC-Signal, Kabel mit mehrphasigem AC-Signal, Holzträger, Metallträger, Kunststoffrohr, wassergefülltes Kunststoffrohr, beispielsweise Frischwasserrohr, nicht-wassergefülltes Kunststoffrohr, beispielsweise Abwasserrohr, und/oder wobei die Wandtypklassen des Wandtyps (123) der Wand (105) umfassen: Betonwand, Leichtbau-/Trockenbauwand, gemauerte Wand und/oder von vermauerten Steinen der Wand, Fußbodenheizung, Wandheizung.

9. Trainingsdatensatz (143) für ein Training einer künstlichen Intelligenz (125) eines Messgeräts (100) zur Wanddiagnostik, wobei der Trainingsdatensatz (143) nach dem Verfahren (300) zum Erzeugen eines Trainingsdatensatzes (143) nach einem der voranstehenden Ansprüche 1 bis 8 erzeugt wurde.

10. Recheneinheit (151), die eingerichtet ist, das Verfahren (300) zum Erzeugen eines Trainingsdatensatzes (143) für ein Training einer künstlichen Intelligenz (125) zum Betreiben eines Messgeräts (100) nach einem der voranstehenden Ansprüche 1 bis 8 auszuführen.

11. Computerprogrammprodukt (500) umfassend Befehle, die bei der Ausführung des Programms durch eine Datenverarbeitungseinheit diese veranlassen, das Verfahren (300) zum Erzeugen eines Trainingsdatensatzes (143) für ein Training einer künstlichen Intelligenz (125) zum Betreiben eines Messgeräts (100) nach einem der voranstehenden Ansprüche 1 bis 8 auszuführen.
